**Europäisches Patentamt**

**European Patent Office**

**Office européen des brevets**

(11) Veröffentlichungsnummer: **0 442 113 A2**

# (12) EUROPÄISCHE PATENTANMELDUNG

(21) Anmeldenummer: **90124814.6**

(22) Anmeldetag: **19.12.90**

(51) Int. Cl.5: **B09B 3/00**

(30) Priorität: **13.02.90 DE 4004336**

(43) Veröffentlichungstag der Anmeldung:
**21.08.91 Patentblatt 91/34**

(84) Benannte Vertragsstaaten:
**AT BE CH DE DK FR GB IT LI NL SE**

(71) Anmelder: **APU GmbH, GESELLSCHAFT FÜR
ANALYTIK UND PLANUNG VON
UMWELTTECHNOLOGIE
Kapellenstrasse 1**
**W-7597 Rheinau 2(DE)**

(72) Erfinder: **Seifermann, Franz
Kapellenstrasse 1
W-7597 Rheinau 2(DE)**

(74) Vertreter: **Durm, Klaus, Dr.-Ing. et al
Patentanwälte Dr.-Ing. Klaus Durm Dipl.-Ing.
Frank Durm Felix-Mottl-Strasse 1a
W-7500 Karlsruhe 21(DE)**

(54) **Verfahren und Vorrichtung zur Beseitigung von Kühlgeräten.**

(57)

2.1 Die Verwertung von Kühlgeräten mit Isolierungen aus Polyurethanschaum ist wegen dessen hohen Gehaltes an Treibmitteln in Form von Fluorchlorkohlenwasserstoffen eine dringende Aufgabe. Solche Kühlschränke sind bisher nach Entfernung der Kühlaggregate ohne weitere Maßnahmen auf offene Hausmülldeponien gegeben worden.

2.2 Zur umweltbewußten und gefahrlosen Entsorgung bei nahezu vollständiger Möglichkeit zur Wiedergewinnung der Gerätebestandteile werden die Kühlgeräte 15 in einem geschlossenen Arbeitsraum 1 mittels einem Zerkleinerungswerkzeug 4 in faustgroße Bruchstücke 19 zerkleinert, diese werden mit körnigem Strahlmittel 26 unter Zertrümmerung der Zellen des Polyurethanschaumes abgestrahlt. Die dabei frei werdenden Fluorchlorkohlenwasserstoffe werden abgesaugt und niedergeschlagen, die abgestrahlten Bruchstücke 19 sortiert und die Polyurethanschaum-Reste mit einer Kolbenpresse 10 zu Briketts 46 verpreßt.

2.3 Das Verfahren dient zur vollständigen Verwertung insbesondere von Haushaltskühlschränken, Kühltruhen und Kühltheken.

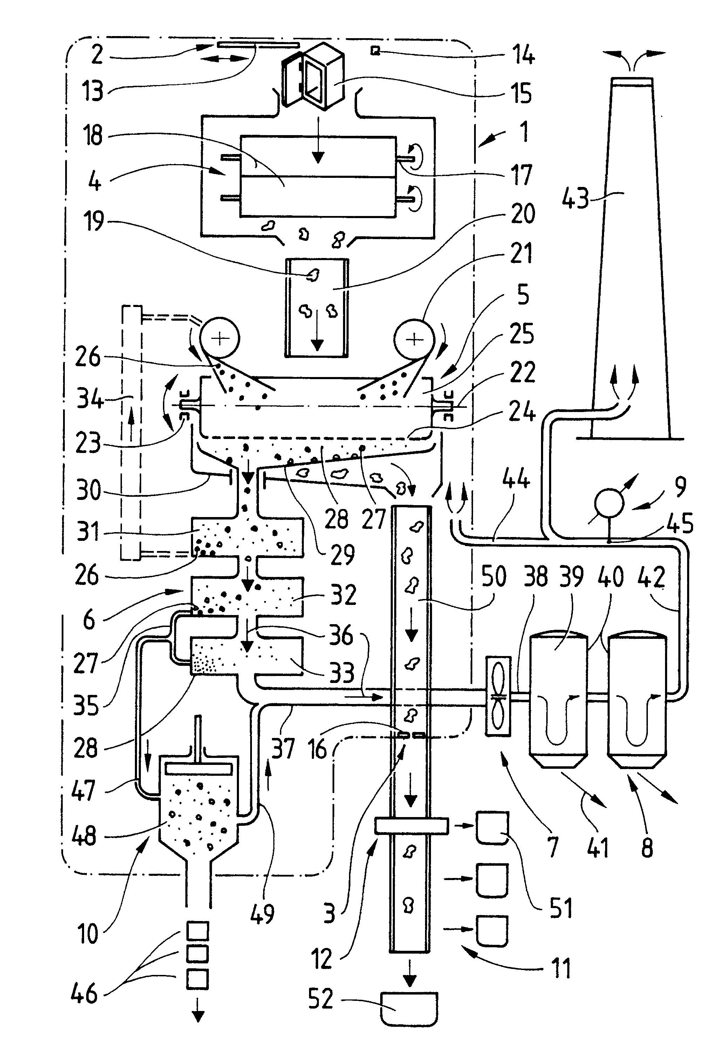

3. In Verbindung mit der Zeichnung.

# VERFAHREN UND VORRICHTUNG ZUR BESEITIGUNG VON KÜHLGERÄTEN

Die Erfindung betrifft ein Verfahren und eine entsprechende Vorrichtung zur Beseitigung von Kühlgeräten mit einer Isolierung aus Polyurethanschaum nach Entfernung der Kühlaggregate und der Zubehörteile.

Die Entsorgung von Kühlgeräten wie Haushaltkühlschränken, Kühltruhen und Kühltheken war bisher ein ungelöstes Problem, dem relativ wenig Aufmerksamkeit geschenkt worden ist. Die Beseitigung von Kühlgeräten geschah in der Regel dadurch, daß die Kühlflüssigkeit abgesaugt und dann das ganze Gerät auf die Deponie gegeben wurde.

Bei der bisherigen Art der Beseitigung von Kühlgeräten wurde außer Acht gelassen, daß zum Beispiel bei einem Haushaltkühlschrank durchschnittlicher Größe die Kühlflüssigkeit etwa 150 Gramm der die Umwelt in hohem Maße gefährdenden Fluorchlorkohlenwasserstoffe enthält, die aus Polyurethanschaum bestehende Isolierung der neueren Kühlgeräte aber in dieser Isolierung mehr als die doppelte Menge, nämlich rund 400 Gramm Fluorchlorkohlenwasserstoffe aufweisen, welche bei Ablage auf der offenen Deponie im Laufe der Zeit frei werden und zur Bildung des Ozonloches in der Atmosphäre noch in Jahrzehnten beitragen können.

Es ist die Aufgabe der vorliegenden Erfindung, ein Verfahren zur umweltfreundlichen und gefahrlosen Beseitigung von Kühlgeräten mit Isolierungen aus Polyurethan anzugeben, bei welchem nahezu alle Gerätebestandteile der Wiederverwertung zugeführt werden können.

Die Aufgabe der Erfindung besteht weiterhin darin, eine Vorrichtung zur Beseitigung von Kühlschränken mit Polyurethanschaum-Isolierung zu konzipieren, mit welcher das Verfahren durchzuführen ist.

Die auf die Angabe eines Verfahrens gerichtete Aufgabe wird nach Entfernen der Kühlaggregate und der Zubehörteile der Kühlgeräte durch folgende nacheinander bzw. nebeneinander durchzuführende Schritte gelöst: Einbringen der Kühlgeräte durch einen Eingangsschleuse in einen luftdicht abgeschlossenen Arbeitsraum, mechanische Zerkleinerung der Kühlgeräte innerhab des Arbeitsraumes mittels motorgetriebener Zerkleinerungswerkzeuge in etwa faustgroße Bruchstücke, Abstrahlen der Bruchstücke mit Hilfe von körnigen Strahlmitteln im Arbeitsraum mit Ablösen des Polyurethanschaumes, Zerschießen der geschlossenen Zellen und Zertrümmern der Zellwände des Polyurethanschaumes zu Polyurethanschaum-Flocken und Polyurethanschaum-Mehl, Trennen der Polyurethanschaum-Flocken sowie des Polyurethanschaum-Mehles von den abgestrahlten Bruchstücken und von den Strahlmitteln, Absaugen des aus dem zertrümmerten Polyurethanschaum freigewordenen Treibmittels - der Fluorchlorkohlenwasserstoffe - zusammen mit der Abluft des Arbeitsraumes, Herausbringen der abgestrahlten Bruchstücke aus dem Arbeitsraum durch eine Ausgangsschleuse, Entfernen des Treibmittels aus der Abluft und Sammeln der Polyurethanschaum-Flocken und des Polyurethanschaum-Mehles.

Bei Anwendung dieses Verfahrens ist eine nahezu vollständige Entsorgung von Haushaltkühlschränken, Kühltruhen und Kühltheken möglich, die Geräte werden dabei in alle ihre Bestandteile wie Eisenblech, Nichteisenmetalle, Kunststoffe und Polyurethanschaum zerlegt, wobei insbesondere die beim Aufschäumen des Polyurethanschaumes der Isolierung verwendeten Treibmittel - die gefährlichen Fluorchlorwasserstoffe - aus den Zellen des Polyurethanschaumes in aufeinanderfolgenden Stufen nahezu restlos entfernt und abgetrennt werden, so daß sie gefahrlos beseitigbar sind.

Zweckmäßig findet ein Zusammenführen der Polyurethanschaum-Flocken und des Polyurethanschaum-Mehles statt, was deren Weiterverarbeitung erleichtert.

Um das Abführen und den Transport der abgetrennten Polyurethanschaum-Teile zu erleichtern, werden die Flocken zusammen mit dem Mehl zu Briketts verpreßt.

Vorteilhaft wird das bei der Herstellung des Polyurethanschaumes verwendete Treibmittel - die Fluorchlorkohlenwasserstoffe - mittels eines oder mehrerer abwechselnd betriebener Aktivkohlefilter abgetrennt.

Zum Zwecke der Wiederverwendung können die aus dem Arbeitsraum herausgebrachten, abgestrahlten - d.h. von den Resten des Polyurethanschaumes gereinigten - Bruchstücke der Kühlgeräte entsprechend ihrer werkstoffmäßigen Zusammensetzung sortiert werden, was von Hand oder mit Hilfe geeigneter Vorrichtungen geschehen wird.

Bei einer Vorrichtung zur Beseitung von Kühlgeräten mit Polyurethanschaum-Isolierung, welche ihrer Aggregate und Zubehörteile entkleidet sind, wird die gestellte Aufgabe gelöst durch einen luftdicht abgeschlossenen Arbeitsraum mit einer Eingangsschleuse und einer Ausgangsschleuse, durch ein mechanisches, motorgetriebenes Zerkleinerungswerkzeug im Arbeitsraum, durch eine Abstrahlvorrichtung im Arbeitsraum, durch eine Trenneinrichtung im Arbeitsraum und durch ein Absauggebläse, welches mit dem Arbeitsraum in Verbindung steht.

Mit dem Zerkleinerungswerkzeug gelingt es, die zu entsorgenden Kühlgeräte in kleine Stücke aufzutrennen und die Polyurethanschaum-Isolation zu zerreißen, wobei bereits ein gewisser Prozentsatz der im Polyurethanschaum steckenden Treibmittel in Gestalt von Fluorchlorkohlenwasserstoffen entweicht. Durch die Abstrahlanlage werden die Bruchstücke von dem anhaftenden Polyurethanschaum getrennt und gereinigt, wobei durch Zerschießen der geschlossenen Zellen und Zertrümmern der Zellwände des Polyurethanschaumes durch die Strahlmittel der Abstrahlvorrichtung etwa 90 Prozent des Treibmittels frei wird, so daß es der Trenneinrichtung zugeführt werden kann. Das Absauggebläse betätigt die Trenneinrichtung und erzeugt im Arbeitsraum einen gewissen Unterdruck und verhindert dadurch unerwünschtes Austreten der Fluorchlorkohlenwasserstoffe nach außen. Die Vorrichtung ist selbstverständlich auch zur Beseitigung von Kühlgeräten mit Isolierungen aus anderen Schaumstoffen geeignet.

Zweckmäßig dient eine Schiebetür als Eingangsschleuse für die zu beseitigenden Kühlschränke, welche durch eine von den Kühlschränken beeinflußbare Lichtschranke gesteuert ist.

Als Ausgangsschleuse für die abgestrahlten und damit gereinigten Bruchstücke dient vorteilhaft ein Lamellenvorhang, unter welchem die Teile hindurchlaufen.

Vorteilhaft werden als Zerkleinerungswerkzeuge zwei ineinandergreifende, um ihre Längsachse drehbare und mit einem Elektromotor angetriebene Schneidwalzen - also eine als "Shredder" bezeichnete Vorrichtung - verwendet.

In der Praxis hat sich gezeigt, daß die Verwendung einer Schleuderrad-Abstrahlanlage als Zerkleinerungswerkzeug den gestellten Anforderungen am besten gerecht wird. Eine solche Anlage ist beispielsweise mit wenigstens zwei Schleuderrädern ausgestattet, die über einer um ihre Längsachse pendelnd aufgehängten und gelochten Wanne aus Stahl angeordnet sind. Hierbei dient als Strahlmittel vorteilhafterweise Stahlguß- oder Strahldrahtkorn.

Neben den abgestrahlten und damit gereinigten, im Durchschnitt etwa handtellergroßen Bruchstücken der im Shredder zerlegten Kühlgeräte, verlassen die Abstrahlvorrichtung sowohl das Strahlmittel wie Polyurethanschaum-Flocken und Polyurethanschaum-Mehl, die allesamt der Trenneinrichtung zugeführt werden, welche aus einem Abscheider in Gestalt eines Windsichters, eines Fliehkraftabscheiders und eines Feinfilters besteht.

Es ist zweckmäßig, das vorgeschlagene mit dem Arbeitsraum in Verbindung stehende Absauggebläse an die Trenneinrichtung anzuschließen.

Neben dem Absauggebläse ist zur Abscheidung der in der Vorrichtung freigesetzten Treibmittel eine Aktivkohle-Filteranlage angeordnet.

Zur Überwachung des Filtereffektes ist am Ausgang der Aktivkohle-Filteranlage eine Reinluftleitung mit einer zur Messung des Treibmittel-Gehaltes dienenden Abluft-Meßeinrichtung angeordnet. Um die im Fliehkraftabscheider abgeschiedenen Polyurethanschaum-Flocken und das im Feinfilter aufgefangene Polyurethanschaum-Mehl zusammenzuführen, sind beide über eine Abführleitung miteinander verbunden.

Zur Verpreßung der in der Abführleitung miteinander vermischten Polyurethanschaum-Flocken und des Polyurethanschaum-Mehles dient eine im Arbeitsraum aufgestellte Kolbenpresse, in deren Zylinderraum die Abführleitung mündet. Bei diesem Verpressen wird der letzte Rest des Treibmittels ausgetrieben.

Es ist zweckmäßig, wenn an die Abstrahlvorrichtung eine Sortiereinrichtung zum Sortieren der Bruchstücke nach ihrer Zusammensetzung angeschlossen ist.

Als Sortiereinrichtung dient vorzugsweise ein Transportband mit nebenstehend vorgesehenen Sammelbehältern, welches sich an die Abstrahlvorrichtung anschließt.

Zur Aussortierung der Eisenblech-Bruchstücke ist über dem Transportband ein Magnetabscheider angeordnet.

Zur Energieeinsparung und zur Verminderung von Heizkosten ist an die Reinluftleitung eine Teilstromleitung angeschlossen, die im Arbeitsraum mündet, so daß ein Teil der warmen Reinluft zu Heizungszwecken benutzt wird.

Die Erfindung wird nachstehend an einem Ausführungsbeispiel und unter Bezugnahme auf die beigefügte Zeichnung erläutert. Diese Zeichnung zeigt eine Vorrichtung zur Beseitigung von Kühlgeräten, nämlich von Haushaltkühlschränken, Kühltruhen und Kühltheken, in einer Draufsicht, in vereinfachter, schematischer Darstellung.

Die in der Zeichnung wiedergegebene Vorrichtung besteht im wesentlichen aus einem Arbeitsraum 1 mit einer Eingangsschleuse 2

und einer Ausgangsschleuse 3, einem Zerkleinerungswerkzeug 4, einer Abstrahlvorrichtung 5, einer Trenneinrichtung 6, einem Absauggebläse 7, einer Aktivkohle-Filteranlage 8, einer Abluftmeßeinrichtung 9, einer Kolbenpresse 10, einer Sortiereinrichtung 11 und einem Magnetabscheider 12.

Der mit strichpunktierten Linien angedeutete Arbeitsraum 1 ist eine luftdicht abgeschlossene Werkhalle, in welcher das Zerkleinerungswerkzeug 4, die Abstrahlvorrichtung 5, die Trenneinrichtung 6 und die Kolbenpresse 10 untergebracht sind.

In der Wand des Arbeitsraumes 1 ist die Eingangsschleuse 2 vorgesehen, die aus einer entsprechend abgedichteten Schiebetür 13 besteht, welche durch eine Lichtschranke 14 gesteuert ist.

Außerhalb des Arbeitsraumes 1 und vor der Eingangsschleuse 2 ist - in der Zeichnung nicht dargestellt - ein Rollenband angeordnet, auf dessen Anfang die zu beseitigenden Kühlgeräte aufgestellt werden. In einer ersten Station werden mit Hydraulikscheren die kühlflüssigkeitführenden Leitungen durchtrennt und die Kühlflüssigkeit abgesaugt. In einer zweiten, folgenden Station werden die Kompressoren ausgebaut und aufgebohrt. Das Motoröl wird abgesaugt oder auslaufen gelassen und es gelangt in einen geschlossenen Auffangbehälter, welcher über ein leichtes Vakuum ständig abgesaugt wird. Eine Ölauffangwanne verhindert unerwünschtes Eindringen von Ölresten in den Boden. Auf der dritten Station geschieht die Entfernung aller festen und losen Zubehörteile wie Einsätze, Schalen, Böden, Zierleisten, elektrische Schalter, Thermostaten, Glühbirnen, Kabel etc..

Die ihrer Aggregate und Zubehörteile entkleideten, nackten Kühlgeräte gelangen durch die Eingangsschleuse 2 in den Arbeitsraum 1, z.B. eine Leichtbauhalle. Im Arbeitsraum 1 werden die demontierten Kühlgeräte 14 hintereinander dem Zerkleinerungswerkzeug 4 zugeführt. Nach erfolgter Bearbeitung verlassen die zerkleinerten Teile den Arbeitsraum 1 durch die Ausgangsschleuse 3, einem einfachen Lamellenvorhang 16, welcher von den Teilen selbst betätigt ist.

Das mechanische und motorgetriebene Zerkleinerungswerkzeug 4 ist eine im allgemeinen mit "Shredder" bezeichnete Maschine, welche zwei ineinandergreifende, um ihre parallelen Längsachsen 17 drehbare und von einem (nicht dargestellten) starken Elektromotor angetriebene Schneidwalzen 18 aufweist. Mittels der beiden Schneidwalzen 18 werden die Kühlgeräte 15 in etwa faustgroße Bruchstücke 19 zerkleinert. Diese Bruchstücke 19 bestehen aus Stahlblech, Nichteisenmetallen und Kunststoffen mit und ohne anhaftendem Polyurethanschaum, aus Polyurethanschaum-Teilen und aus verschiedenen Reststoffen. Hierbei wird bereits ein kleiner Prozentsatz der Fluorchlorkohlenwasserstoffe frei, mit welchem der zur Isolierung der Kühlgeräte 15 dienende Polyurethanschaum hergestellt worden war und welcher von der allgemeinen Arbeitsraumabsaugung weggeführt wird. Über ein Fließband 20 gelangen die Bruchstücke 19 in die Abstrahlvorrichtung 5.

Die Abstrahlvorrichtung 5 ist eine Schleuderrad-Abstrahlanlage mit zwei Schleuderrädern 21 und einer um ihre Längsachse 22 pendelnd in Lagern 23 aufgehängten und mit Löchern 24 versehenen Wanne 25 aus Manganstahl. Die in die Wanne 25 eingebrachten, insbesondere mit anhaftendem Polyurethanschaum verunreinigten Bruchstücke 19 werden in der schaukelnden Wanne 25 der Einwirkung von körnigen, zähen Strahlmitteln 26 ausgesetzt, wobei als Strahlmittel 26 Stahlguß- oder Stahldrahtkorn Verwendung findet. Unter diesem Beschuß löst sich von den Bruchstücken 19 der Polyurethanschaum vollständig ab und dessen geschlossene Zellen werden zerschossen und seine Zellwände werden zu Polyurethanschaum-Flocken 27 und Polyurethanschaum-Mehl 28 zertrümmert, welche zusammen mit den Strahlmitteln 26 durch die Löcher 24 der Wanne 25 in ein Fangblech 29 fallen. Die vom Polyurethanschaum wie auch von Lack, Emaille, Rost etc. gereinigten Bruchstücke 19 werden am Ende des Abstrahlvorganges durch voll ständiges Kippen der Wanne 25 auf einen Förderrost 30 ausgeworfen und von dort auf den Anfang der Sortiereinrichtung 11 gelegt. Das freigewordene Treibmittel - die Fluorchlorkohlenwasserstoffe - werden zusammen mit der Abluft des Arbeitsraumes 1 über die Trenneinrichtung 6 von dem Absauggebläse 7 abgesaugt.

Die Trenneinrichtung 6 ist mehrteilig aufgebaut und sie besteht hauptsächlich aus einem Abscheider 31 - nämlich einem sogenannten Windsichter - zum Abscheiden der Strahlmittel 26, einem trocken arbeitenden Fliehkraftabscheider 32 (Zyklon) zum Abtrennen der Polyurethanschaum-Flocken 27 sowie einem selbstreinigenden Feinfilter 33 zum Ausfiltern des Polyurethanschaum-Mehles 28.

Vom Abscheider 31 gelangen die Strahlmittel 26 zu einem Becherwerk 34 und werden von diesem den beiden Schleuderrädern 21 in fortwährendem Kreislauf zugeführt. Der Strahlmitteldurchsatz je Schleuderrad 21 beträgt in der Größenordnung von 300 bis 400 Kilogramm pro Minute.

Nach erfolgter Trennung der Strahlmittel 26 in dem Windsichter von den Polyurethanschaum-Flocken 27 und dem Polyurethanschaum-Mehl werden im Fliehkraftabscheider 32 unter der Einwirkung der Zentrifugalkraft die Polyurethanschaum-Flocken 27 vom Polyurethanschaum-Mehl 28 getrennt und einer Abführleitung 35 zugeführt. Das nachfolgende Feinfilter 33 fängt das Polyurethanschaum-Mehl 28 aus dem vom Absauggebläse 7 durch die Trenneinrichtung 6 gesogenen Luftstrom 36 auf und führt sie in die mit dem Fliehkraftabscheider 32 verbundenen Abführleitung 35.

Die Trenneinrichtung 6 kann zusätzlich eine oder mehrere Reinigungsvorrichtungen enthalten, in welchen sowohl die Lackrückstände wie auch der Metallabrieb zurückgehalten werden.

Das Absauggebläse 7 sitzt außerhalb des Arbeitsraumes 1 und ist über eine starke Saugleitung 37 an die Trenneinrichtung 6 angeschlossen; dieses Absauggebläse 7 drückt den mit Fluorchlorkohlenwasserstoffen geschwängerten Luftstrom 36 in die Aktivkohle-Filteranlage 8.

Die Aktivkohle-Filteranlage 8 dient zum Abscheiden des aus dem zerstören Polyurethanschaum ausgetretenen Treibmittel - der Fluorchlorkohlenwasserstoffe - aus dem Luftstrom 36 der Abluft und ist über ein Rohr 38 an das Absauggebläse 7 angeschlossen. Eingesetzt sind zwei mit Aktivkohle gefüllte Behälter 40, welche abwechselnd beschickt und regeneriert werden. Die abgeschiedenen Flourchlorkohlenwasserstoffe werden niedergeschlagen und flüssiger Form der weiteren Entsorgung zugeführt. Die gereinigte Luft wird über eine Reinluftleitung 42, einen Kamin 43 und - zum Zwecke der Einsparung von Heizungsenergie - über eine im Arbeitsraum 1 mündende Teilstromleitung 44 in den Arbeitsraum 1 teilweise zurückgeführt.

In der Reinluftleitung 42 ist eine Sonde 45 der für die Fluorchlorkohlenwasserstoffe empfindlichen Abluft-Meßeinrichtung 9 angeordnet, welche den Restgehalt an Fluorchlorkohlenwasserstoffen überwacht. Eine zusätzliche (nicht dargestellte) Meßvorrichtung kann den Staubgehalt der Abluft feststellen.

Die Kolbenpresse 10 ist innerhalb des Arbeitsraumes 1 aufgestellt und sie dient zum trockenen Verpressen der Polyurethanschaum-Flocken 27 und des Polyurethanschaum-Mehles 28 zu einfach handhabbaren und leicht transportierbaren Briketts 46. Die Abführleitung 35 aus dem Fliehkraftabscheider 32 und dem Feinfilter 33 geht in eine Überführleitung 47 über und diese mündet im Zylinderraum 48 der Kolbenpresse 10. In der Kolbenpresse 10, die über eine Entlüftungsleitung 49 mit dem Absauggebläse 7 in Verbindung steht, werden die letzten Reste des Treibmittels aus dem Gemisch von Polyurethanschaum-Flocken und Polyurethanschaum-Mehl ausgepreßt, so daß die Briketts 46 mit einem Restgehalt von weniger als zwei Promille Fluorchlorkohlenwasserstoffen problemlos der Wiederverwertung zugeführt werden können.

Die an die Abstrahlvorrichtung 5 sich anschließende Sortiereinrichtung 11 besteht aus einem langen Transportband 50. Die vorne aufgegebenen, in der Abstrahlvorrichtung 5 vom Polyurethanschaum befreiten Bruchstücke 19 gelangen auf dem Transportband 50 durch die Ausgangsschleuse 3 aus dem Arbeitsraum 1 heraus und werden sodann entsprechend der Zusammensetzung ihres Werkstoffes sortiert. Zuerst fahren die Bruchstücke 19 unter dem Magnetabscheider 12 vorbei, wo die Eisenblech-Bruchstücke aussortiert und in einen nebenstehenden Sammelbehälter 51 gegeben werden. Anschließend geschieht von Hand das Aussortieren von Nichteisenmetall-Bruch und Kunst stoff-Bruch in weitere Container, während die Reststoffe am Ende des Transportbandes 50 in einen Müllbehälter 52 zwecks Ablagerung auf einer Hausmüll-Deponie fallen.

Zusammenstellung der verwendeten Bezugsziffern

| | |
|---|---|
| 1 | Arbeitsraum |
| 2 | Eingangsschleuse |
| 3 | Ausgangsschleuse |
| 4 | Zerkleinerungswerkzeug |
| 5 | Abstrahlvorrichtung |
| 6 | Trenneinrichtung |
| 7 | Absauggebläse |
| 8 | Aktivkohle-Filteranlage |
| 9 | Abluft-Meßeinrichtung |
| 10 | Kolbenpresse |
| 11 | Sortiereinrichtung |
| 12 | Magnetabscheider |
| 13 | Schiebetür |
| 14 | Lichtschranke |
| 15 | Kühlgerät |
| 16 | Lamellenvorhang |
| 17 | Längsachsen |
| 18 | Schneidwalzen |
| 19 | Bruchstücke |
| 20 | Fließband |
| 21 | Schleuderräder |
| 22 | Längsachse |
| 23 | Lager |

24 Löcher
25 Wanne
26 Strahlmittel
27 Polyurethanschaum-Flocken
28 Polyurethanschaum-Mehl
29 Fangblech
30 Förderrost
31 Abscheider
32 Fliehkraftabscheider
33 Feinfilter
34 Becherwerk
35 Abführleitung
36 Luftstrom
37 Saugleitung
38 Rohr
39 Aktivkohle
40 Behälter
41 Fluorchlorkohlenwasserstoffe
42 Reinluftleitung
43 Kamin
44 Teilstromleitung
45 Sonde
46 Brikett
47 Überführleitung
48 Zylinderraum
49 Entlüftungsleitung
50 Transportband
51 Sammelbehälter
52 Müllbehälter

**Patentansprüche**

1. Verfahren zur Beseitigung von Kühlgeräten mit Isolierung aus Polyurethanschaum nach Entfernung der Kühlaggregate und Zubehörteile, **gekennzeichnet** durch folgende Verfahrensschritte:
   - Einbringen der Kühlgeräte durch eine Eingangsschleuse in einen luftdicht abgeschlossenen Arbeitsraum,
   - mechanische Zerkleinerung der Kühlgeräte innerhalb des Arbeitsraumes mittels motorgetriebener Zerkleinerungswerkzeuge in etwa faustgroße Bruchstücke,
   - Abstrahlen der Bruchstücke mit Hilfe von körnigen Strahlmitteln im Arbeitsraum, mit Ablösen des Polyurethanschaumes, Zerschießen der geschlossenen Zellen und Zertrümmern der Zellwände des Polyurethanschaumes zu Polyurethanschaum-Flocken und Polyurethanschaum-Mehl,
   - Trennen der Polyurethanschaum-Flocken sowie des Polyurethanschaum-Mehles von den abgestrahlten Bruchstücken und von den Strahlmitteln,
   - Absaugen des aus dem zertrümmerten Polyurethanschaum freigewordenen Treibmittels zusammen mit der Abluft des Arbeitsraumes,
   - Herausbringen der abgestrahlten Bruchstücke aus dem Arbeitsraum durch eine Ausgangsschleuse,
   - Entfernen des Treibmittels aus der Abluft, und
   - Sammeln der Polyurethanschaum-Flocken und des Polyurethanschaum-Mehles.

2. Verfahren nach Anspruch 1, **gekennzeichnet** durch
   - Zusammenführen der Polyurethanschaum-Flocken und des Polyurethanschaum-Mehles

3. Verfahren nach Anspruch 1 oder 2, **gekennzeichnet** durch
   - Verpressen der Polyurethanschaum-Flocken und des Polyurethanschaum-Mehles zu Briketts.

5. Verfahren nach einem der Ansprüche 1 bis 3, **gekennzeichnet** durch
   - Abtrennen des Treibmittels aus der abgesaugten Abluft.

5. Verfahren nach Anspruch 4, **gekennzeichnet** durch
   - Abtrennen des Treibmittels mittels Aktivkohlefilter.

6. Verfahren nach einem der Ansprüche 1 bis 5, **gekennzeichnet** durch
   - Sortieren der aus dem Arbeitsraum herausgebrachten, abgestrahlen Bruchstücke nach der Zusammensetzung ihres Werkstoffes.

7. Vorrichtung zur Beseitigung von Kühlgeräten mit Polyurethanschaum-Isolierung, welche ihre Aggregate und Zubehörteile entkleidet sind, **gekennzeichnet** durch
   - einen luftdicht abgeschlossenen Arbeitsraum (1)
   - mit einer Eingangsschleuse (2) und einer Ausgangsschleuse (3),
   - ein mechanisches, motorgetriebenes Zerkleinerungswerkzeug (4) im Arbeitsraum (1),
   - eine Abstrahlvorrichtung (5) im Arbeitsraum (1),
   - eine Trenneinrichtung (6) im Arbeitsraum (1), und
   - ein Absauggebläse (7), welches mit dem Arbeitsraum (1) in Verbindung steht.

8. Vorrichtung nach Anspruch 7, **gekennzeichnet** durch
   - eine durch eine Lichtschranke (14) gesteuerte Schiebetür (13) als Eingangsschleuse (2).

9. Vorrichtung nach Anspruch 7 oder 8, **gekennzeichnet** durch
   - einen Lamellenvorhang (16) als Ausgangsschleuse (3).

10. Vorrichtung nach einem der Ansprüche 7 bis 9, **gekennzeichnet** durch
   - zwei ineinandergreifende, um ihre Längsachsen (17) drehbare und mit einem Elektromotor angetriebene Schneidwalzen (18) als Zerkleinerungswerkzeug (4).

11. Vorrichtung nach einem der Ansprüche 7 bis 10, dadurch **gekennzeichnet,** daß

- als Abstrahlvorrichtung (5) eine Schleuderrad-Abstrahlanlage mit wenigstens zwei Schleuderrädern (21) dient, die über einer um ihre Längsachse (22) pendelnden, gelochten Wanne (25) angeordnet sind, und
- als Strahlmittel (26) Stahlguß- oder Stahldrahtkorn verwendet wird.

12. Vorrichtung nach einem der Ansprüche 7 bis 11, dadurch **gekennzeichnet,** daß

- die Trenneinrichtung (6) einen Abscheider (31) zum Aussondern des Strahlmittels (26),
- einen trocken arbeitenden Fliehkraftabscheider (32) zum Abtrennen der Polyurethanschaum-Flocken (27), und
- ein selbstreinigendes Feinfilter (33) zum Ausfiltern des Polyurethanschaum-Mehles (28) aufweist.

13. Vorrichtung nach einem der Ansprüche 7 bis 12, dadurch **gekennzeichnet,** daß

- das Absauggebläse (7) an die Trenneinrichtung (6) angeschlossen ist.

14. Vorrichtung nach einem der Ansprüche 7 bis 13, dadurch **gekennzeichnet,** daß

- neben dem Absauggebläse (7) eine Aktivkohle-Filteranlage (8) zum Abscheiden des Treibmittels angeordnet ist.

15. Vorrichtung nach Anspruch 14, dadurch **gekennzeichnet,** daß

- am Ausgang der Aktivkohle-Filteranlage 8) eine Reinluftleitung (42) angeschlossen ist,
- in welcher eine für das Treibmittel empfindliche Abluft-Meßeinrichtung (9) vorgesehen ist.

16. Vorrichtung nach einem der Ansprüche 7 bis 15, **gekennzeichnet** durch

- eine den Fliehkraftabscheider (32) und das Feinfilter (33) verbindende Abführleitung (35).

17. Vorrichtung nach einem der Ansprüche 7 bis 16, **gekennzeichnet** durch

- eine Kolbenpresse (10)
- die im Arbeitsraum (1) aufgestellt ist.

18. Vorrichtung nach Anspruch 17, dadurch **gekennzeichnet,** daß

- die Abführleitung (35) in der Kolbenpresse (10) mündet.

19. Vorrichtung nach einem der Ansprüche 7 bis 18, **gekennzeichnet** durch

- eine Sortiereinrichtung (11),
- die an die Abstrahlvorrichtung (5) angeschlossen ist.

20. Vorrichtung nach Anspruch 19, **gekennzeichnet** durch

- ein Transportband (50) mit nebenstehend vorgesehenen Sammelbehältern (51) als Sortiereinrichtung (11),
- welches sich an die Abstrahlvorrichtung (5) anschließt.

21. Vorrichtung nach Anspruch 20, dadurch **gekennzeichnet,** daß

- über dem Transportband (50) ein Magnetabscheider (12) angeordnet ist.

22. Vorrichtung nach einem der Ansprüche 15 bis 21, dadurch **gekennzeichnet,** daß

- an die Reinluftleitung (42) eine Teilstromleitung (44) anschließt, die im Arbeitsraum (1) mündet.